# EUROPÄISCHE PATENTSCHRIFT

(11) **EP 0 752 203 B1**
(45) Veröffentlichungstag und Bekanntmachung des Hinweises auf die Patenterteilung: **13.09.2000**
(21) Anmeldenummer: 96114671.9
(22) Anmeldetag: 16.07.1994
(51) Int. Cl.: A01C 7/08, A01C 15/04

(54) **Landwirtschaftliche pneumatische Verteilmaschine**
Agricultural pneumatic distributor
Distributeur pneumatique agricole

(30) Priorität: 11.09.1993 DE 9313779 U
(43) Veröffentlichungstag der Anmeldung: 08.01.1997
(62) Teilanmeldung aus: 94111112.2
(73) Patentinhaber: Rabewerk GmbH + Co., 49152 Bad Essen (DE)
(72) Erfinder: Clausing, Fritz, Dipl.-Ing., 49152 Bad Essen (DE)
(74) Vertreter: Missling, Arne, Dipl.-Ing.

(56) Entgegenhaltungen:
- Keine einschlägigen Dokumente gefunden

## Beschreibung

Die Erfindung betrifft eine landwirtschaftliche pneumatische Verteilmaschine zum Verteilen eines vorzugsweise körnigen Verteilgutes, insbesondere eines Saatgutes oder eines Düngers aus einem Vorratsbehälter mit einer Dosiereinrichtung für die dosierte Förderung des Verteilgutes aus dem Vorratsbehälter über eine Zuleitung zu einem Verteilerkopf, und mit mehreren an dem Verteilerkopf angeschlossenen Verteilerleitungen zur Zuführung von jeweils einer Teilmenge des Verteilgutes zu jeweils einem Streuer für das Verteilgut, insbesondere einem Säschar oder einem Düngerstreuer, wobei zumindest ein Teil der Verteilerleitungen an ihren Abgängen aus dem Verteilerkopf mit Absperreinrichtungen versehen ist, die so schaltbar sind, daß die Förderung des Verteilgutes zu dem jeweils zugehörigen Streuer abgesperrt ist und stattdessen über eine jeweils zugehörige Rückleitung erfolgt.

Eine solche Verteilmaschine ist aus der EP 0 376 018 A2 bereits bekannt. Sie ist insbesondere zum Verteilen von Saatgut eingerichtet und soll sicherstellen, daß die Saatgutausbringung auf den Acker mit stets gleicher flächenspezifischer Saatmenge erfolgt, unabhängig davon, ob für eine später notwendige Behandlung des aufgelaufenen Saatgutes die Anlage einer Fahrgasse für einen Schlepper erforderlich ist oder nicht.

Derartige Fahrgassen müssen oftmals unvermeidlich angelegt werden, beispielsweise, wenn Saatkulturen durch schleppergezogene Maschinen einer (zweiten) Düngung unterzogen oder mit Herbiziden behandelt werden sollen; andernfalls würde eine stabile Geradeaus-Fahrt des Schleppers und der optimale Abstand zur nächsten Fahrspur nicht einzuhalten sein, die Kulturen würden in den von den Schlepperrädern überfahrenen Bereichen zerstört und der Ertrag in einer dementsprechenden Größenordnung gemindert.

Es ist davon auszugehen, daß die Anzahl der saatgutfördernden Verteilerleitungen an einem Verteilerkopf bereits ohne Berückichtigung der eventuell zu gerierenden Fahrgassen höher sein kann als erforderlich, weil sie von vielen Einflußfaktoren abhängig ist; umsomehr ist das der Fall, wenn Verteilerleitungen stillgelegt werden müssen, um eine Fahrgasse in der bestellten Kultur zu belassen. Die überflüssigen Verteilerleitungen könnten zwar entfernt werden; dies ist jedoch umständlich, und man behilft sich üblicherweise damit, daß sie einfach abgesperrt und die zugehörigen Streuer entfernt werden. Es muß dann allerdings dafür gesorgt werden, daß die Saatgutausbringung trotzdem gleichmäßig erfolgt und eine optimale Saatdichte überall erzeugt wird. Bereits in der EP 0 252 348 A1 ist zu diesem Zweck vorgesehen, daß nicht einfache Verschlüsse, sondern vielmehr steuerbare Absperreinrichtungen angeordnet werden, die das überschüssige Saatgut über Rückleitungen in den Vorratsbehälter leiten. Alle "aktivierten" Verteilerleitungen und die von ihnen belieferten Säschare erhalten sämtlich die gleiche Fördermenge an Saatgut. Allerdings wird dabei die erforderliche Saatgutmenge weit unterschritten, wenn auf Fahrgassen-Betrieb umgestellt wird. Es ist deshalb erforderlich, dann die Dosierung kurzfristig und in erheblichem Umfang anzuheben. Besonders nachteilig ist es aber, daß die Rückführung großer Saatgutmengen in den Vorratsbehälter erhebliche Probleme bereitet, wenn dieser weit von der übrigen Verteilmaschine entfernt vorgesehen ist.

Von der Erkenntnis ausgehend, daß beiderseits der Fahrgassen eine etwas erhöhte Saatgutausbringung durchaus erwünscht sein kann, weil die dort auflaufenden Kulturen späterhin auch die Fahrgassen als Standraum für ihre Entwicklung benutzen können und demzufolge kein wesentlicher Minderertrag gegenüber fahrgassenfreien Flächen eintritt, ist in der EP 0 376 018 A2 vorgesehen, das für "verschlossene" Verteilerleitungen vorgesehene Saatgut auf die den Fahrgassen benachbarten Säschare umzuleiten.

Auf diese Weise würde nun aber den fahrgassen-benachbarten Säscharen die doppelte Menge an Saatgut zugeführt, und dies ist viel mehr, als für eine gedeihliche Entwicklung der Pflanzen zulässig ist. Es ist auch zu beachten, daß im allgemeinen jeder einem Schlepperrad zugeordneten Fahrgasse mehr als nur ein weggelassenes Säschar gegenübersteht; das bedeutet aber, daß auch aus der Fahrgasse nicht unmittelbar benachbarten Säscharen die doppelte Menge Saatgutes ausgebracht wird, dort also, wo kein zusätzlicher Standraum verfügbar ist. Bei einer solchen Anordnung dürften sich daher Mindererträge beziehungsweise Qualitätsminderungen nicht vermeiden lassen.

Die Erfindung hat sich demzufolge die Aufgabe gestellt, eine Verteilmaschine der eingangs näher bezeichneten Art so auszubilden, daß einerseits die Verteilerleitungen des Verteilerkopfes beliebig abgesperrt und wieder zugeschaltet werden können und andererseits trotzdem die verbleibende Ackerfläche unabhängig davon stets mit gleicher Verteilgutdichte belegt werden kann. Außerdem soll es möglich sein, die übrige Verteilmaschine auch weit entfernt von dem Vorratsbehälter vorzusehen.

Erfindungsgemäß wird die Aufgabe dadurch gelöst, daß die Rückleitung bypassartig in der Zuleitung zu dem Verteilerkopf mündet und daß bei gesperrten Verteilerleitungen die Dosiereinrichtung so eingeregelt oder - gesteuert wird, daß die ausgebrachte, auf die Bestellfläche bezogene Menge des Verteilgutes sich gegenüber derjenigen bei entsprechend aktivierten Verteilerleitungen nicht verändert. Hierdurch kann z. B. beim Anlegen von Fahrgassen die Saatmenge entsprechend der Anzahl der Fahrgassenschare reduziert werden. Ganz besonders wirkungsvoll ist die erfindungsgemäße Anordnung, wenn dabei die Rückleitung in einem vorzugsweise senkrechten, unmittelbar vor dem Verteilerkopf befindlichen Teil der Zuleitung mündet; es ist aber auch möglich, daß die Rückleitung in einem vorzugsweise gekrümmten, vor dem Verteilerkopf befindlichen Teil der Zuleitung, beispielsweise in einem waagerechten Bereich dieses Teiles und insbesondere an der Stelle mit der größten Krümmung, mündet.

Auf diese Weise werden lange Rückförderleitungen zu dem Vorratsbehälter vermieden, und dieser kann nach statischen Gesichtspunkten dort vorgesehen werden, wo seine Masse (insbesondere, wenn er voll gefüllt ist) die geringsten Probleme bereitet. Das für die geschlossenen Verteilerleitungen berechnete "überschüssige" Verteilgut wird weder in den Vorratsbehälter zurücktransportiert noch einigen wenigen Verteilerleitungen zugeführt, sondern eine entsprechende Menge wird der Zuleitung bereits weniger zugeführt, so daß die Verteilgutmenge pro genutzter Flächeneinheit gleich hoch gehalten werden kann.

Es ist besonders vorteilhaft, wenn die Zuleitung in Förderrichtung vor, vorzugsweise unmittelbar vor dem Anschluß der Rückleitung in die Zuleitung eine düsenartige erste Einziehung ihres Querschnitts aufweist, die so bemessen ist, daß das Verteilgut aus der Rückleitung in die Zuleitung angesaugt wird. Auf diese Weise ist sichergestellt, daß das überschüssige Verteilgut tatsächlich im Kreislauf in die Zuleitung und von dort in den Verteilerkopf zurückbefördert wird. Dieser Kreislauf ist nach kurzer Arbeitszeit der Verteilmaschine stationär, und das überschüssige Verteilgut wird tatsächlich aus der Verteilmaschine gefördert.

Die Wirkungsweise des Verteilerkopfes wird noch verbessert, wenn die Zuleitung vor, vorzugsweise unmittelbar vor ihrer Einmündung in den Verteilerkopf eine düsenartige zweite Einziehung aufweist. Dadurch wird der Förderstrom durch die Zuleitung vor seinem Austritt auf den Verteilerkopf zentriert und erneut beschleunigt.

Eine besonders praktische Bauweise ergibt sich, wenn die Absperreinrichtungen in Stutzen vorgesehen sind, die von dem Verteilerkopf trennbar und mit denen die Verteilerleitungen verbindbar sind, wobei vorteilhaft in den Stutzen der absperrbaren Verteilerleitungen jeweils die von der zugehörigen Absperreinrichtung beeinflußte Abzweigung für die Rückleitung vorgesehen ist, denn die Stutzen werden nur an denjenigen Verteilerleitungen gebraucht, die zu den vorgesehenen Fahrgassen führen. Es ist praktisch, wenn die Absperreinrichtungen als elektromagnetisch betätigbare Klappen ausgebildet sind.

Auf diese Weise kann man zusätzlich dafür sorgen, daß der Verteilerkopf an die jeweiligen Bedingungen zunächst ohne Rücksicht darauf, ob einzelne Verteilerleitungen zeitweilig passiviert werden, angepaßt ist.

Die Zuordnung von Rückleitungen zu der Zuleitung läßt sich besonders einfach gestalten, wenn die Abzweigungen jeweils in einem an dem Stutzen - gegebenenfalls abgedichtet - anschließenden Trichter münden, an dem die zugehörige Rückleitung angeschlossen ist; besonders günstig ist es, wenn dabei mindestens zwei Abzweigungen in einem Trichter enden. Auf diese Weise kommt man bei gegebenenfalls mehreren stillgelegten Verteilerleitungen mit nur einer Rückleitung aus.

Die erfindungsgemäße Anordnung ist leicht herstellbar sowohl, wenn die Einziehung rotationssymmetrisch zu der Achse der Zuleitung ausgebildet ist, bei der die Einziehung eine kegelige Mantelfläche aufweisen kann, als auch dann, wenn die Einziehung von einem in der Zuleitung vorgesehenen, vorzugsweise ebenen, den Strömungsquerschnitt in der Zuleitung in Strömungsrichtung sukzessive bis zur Einmündung der Rückleitung vermindernden Düsenblech gebildet wird, wobei das Düsenblech so angeordnet sein kann, daß ein kreisförmiger Strömungsquerschnitt in Strömungsrichtung sukzessive bis zur Einmündung der Rückleitung durch einen in Strömungsrichtung sukzessive sich vergrößernden Kreisabschnitt vermindert wird.

Es ist damit gezeigt, daß die Erfindung ganz verschiedenen konstruktiven Voraussetzungen angepaßt werden kann, so daß eine optimale Ausführung auswählbar ist, ohne die wesentlichen erfinderischen Mermale aufgeben zu müssen.

Die Wirkungsweise kann beispielsweise auch noch dadurch verbessert werden, daß in Strömungsrichtung unmittelbar hinter der Einziehung, beispielsweise in der Zuleitung oder der Rückleitung, eine Zuluftdüse für eine der Umgebung entnommene Zuluft vorgesehen ist. Die damit verbundene Erhöhung der Luftströmung nach der Zuluftdüse reduziert die Verstopfungsgefahr in dem Verteilerkcpf und den Verteilerleitungen und entlastet andererseits die Zuleitung.

Die Rückleitung kann absperrbar ausgebildet sein, beispielsweise, indem, vorzugsweise kurz vor ihrer Einmündung in die Zuleitung ein Schieber vorgesehen ist.

Muß während der laufenden Ausbringung von Verteilgut dessen Fördermenge veränderten Bedingungen angepaßt werden, etwa, wenn bei einer Sämaschine einzelne Säschare stillgelegt werden, um eine Fahrgasse herzustellen, dann ist das eine vergleichsweise einfach zu bewerkstelligende Maßnahme. Es ist dann zunächst vorteilhaft, wenn dies nicht durch Manipulation des Verteilerkopfes, sondern dadurch erfolgt, daß eine Fahrgassenschaltung vorgesehen ist, die selbsttätig oder manuell aktivierbar ist und die dabei mittels der Absperreinrichtungen diejenigen Verteilerleitungen absperrt, deren Streuer in dem Weg der Schlepperräder eines die Verteilmaschine bewegenden Schleppers enden. Man kann auf diese Weise die Gestaltung der erforderlichen Parameter vorbestimmen und muß dies nicht in umständlicher Weise auf dem Acker besorgen.

Bei aktivierter Fahrgassenschaltung wird die Dosiereinrichtung so eingeregelt oder -gesteuert wird, daß die ausgebrachte, auf die Bestellfläche bezogene Menge des Verteilgutes sich gegenüber derjenigen bei deaktivierter Fahrgassenschaltung nicht verändert, so daß, unabhängig von einer generellen Vorbestimmung der auszubringenden Menge an Verteilgut, diese an die sich während des Ausbringens ändernden Bedingungen anpassen oder angepaßt werden kann. Insbesondere hat hier die Verwendung von Bordcomputern Wege eröffnet, daß von der Maschine alle Maßnahmen selbsttätig getroffen werden können, die eine willkürliche Änderung des Sollwertes einer Regelung nach sich ziehen. Die Einzelheiten sind fachüblich und stehen nicht in unmittelbarem Zusammenhang mit der Erfindung, aber sie ermöglichen immerhin deren vorteilhafte Realisierung.

Die Erfindung ist im wesentlichen auf eine Anwendung bei der Ausbringung von Saatgut mit Hilfe entsprechender Sämaschinen gerichtet, sie ist aber darauf keineswegs beschränkt. Wesentlich ist allerdings, daß das Verteilgut in der erfindungsgemäßen Weise überhaupt förderbar ist. Ohne Schwierigkeiten können beispielsweise geeignete Düngemittel gleichermaßen mit einer derartigen Einrichtung ausgebracht werden.

Weitere Vorteile der Erfindung und die näheren Einzelheiten werden nachstehend an Hand der Zeichnung an einem Ausführungsbeispiel näher erläutert. Es zeigen
- Fig.1: eine Gesamtansicht einer erfindungsgemäßen Verteilmaschine,
- Fig.2: eine Einzelheit A aus Fig.1,
- Fig.3: eine Einzelheit B aus Fig.2 in einer gegenüber Fig.1 und 2 etwas veränderten Ausführung,
- Fig.4 und Fig.4a: je einen Verteilerkopf gemäß Fig.1 mit leicht veränderter Anordnung der Rückleitung und
- Fig. 5: ein weiteres Ausführungsbeispiel gemäß der Erfindung,
sämtlich in schematischer Darstellung.

In der Zeichnung sind nur die für das Verständnis der Wirkungsweise der erfindungsgemäßen Verteilmaschine unverzichtbaren Funktionselemente dargestellt.

Ein Vorratsbehälter 1 für ein auf einem Acker zu verteilendes Verteilgut 2, üblicherweise beispielsweise ein Saatgut, ist ein wesentlicher Teil etwa einer Sämaschine und an dieser starr befestigt. Er ist mit einer Dosiereinrichtung 3 verbunden, die in geeigneter Weise, zumeist in Abhängigkeit von der Fahrgeschwindigkeit des alle Teile tragenden oder bewegenden Schleppers, angetrieben wird. Ein Gebläse 4 erzeugt einen pneumatischen Förderstrom für das Verteilgut 2 in einer Zuleitung 5 und fördert das Verteilgut 2 aus dem Vorratsbehälter 1.

Es ist dabei ohne weiteres möglich, den Vorratsbehälter 1, die Dosiereinrichtung 3 und das Gebläse 4 an der Frontseite des Schleppers zu befestigen, so daß dessen rückseitige Überlastung von vornherein vermieden wird.

Die übrigen Teile der Verteilmaschine sind stattdessen am Heck des Schleppers vorgesehen. So kann der erforderliche Rahmen für einen Verteilerkopf 6 und die zugehörigen erforderlichen Streuer, beispielsweise die Säschare, deren Aufhängung usw. durch Ober- und Unterlenker einer üblichen Dreipunktaufhängung mit dem Schlepper verbunden und hydraulisch heb- und senkbar sein. Alle diese Einzelheiten sind fachüblich und in der Zeichnung deshalb weggelassen worden.

Die vorteilhaft flexibel gehaltene Zuleitung 5 endet in einem starren, senkrechten Teil 5a, durch das das Verteilgut 2 senkrecht nach oben transportiert wird. Eine erste und eine zweite Einziehung 5b und 5c des Förderquerschnittes der Zuleitung 5 sorgen düsenartig für eine zumindest zeitweilige Beschleunigung des Förderstromes. Während die zweite Einziehung 5b unmittelbar vor der Einmündung ("5d" entfällt hier!) der Zuleitung 5 in den Verteilerkopf 6 dafür sorgt, daß in den nachfolgenden Förderleitungen der nötige Staudruck bereitgestellt wird, dient die erste Einziehung 5c dazu, in einer Rückleitung 6a einen Unterdruck an der Stelle zu erzeugen, wo diese Rückleitung 6a in die Zuleitung 5 eingebunden ist. Die Rückleitung 6a mündet andererseits in einer absperrbaren Verteilerleitung 71. Eine weitere, aber nicht absperrbare Verteilerleitung 72 wird ebenfalls von der Zuleitung 5 aus mit Verteilgut 2 beliefert. Beide Arten der Verteilerleitungen 7 kommen an dem Verteilerkopf 6 mehrfach vor; die Verteilerleitungen 72 können überwiegen.

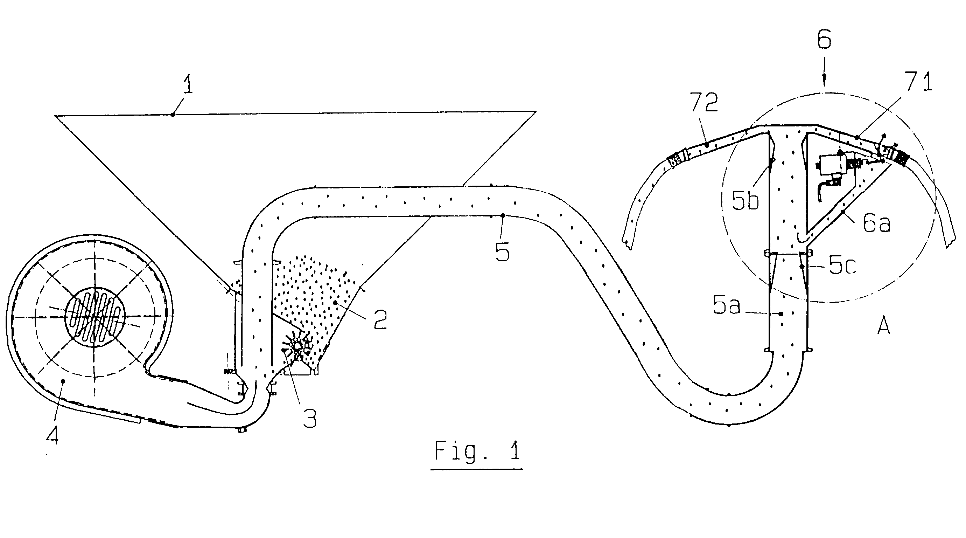

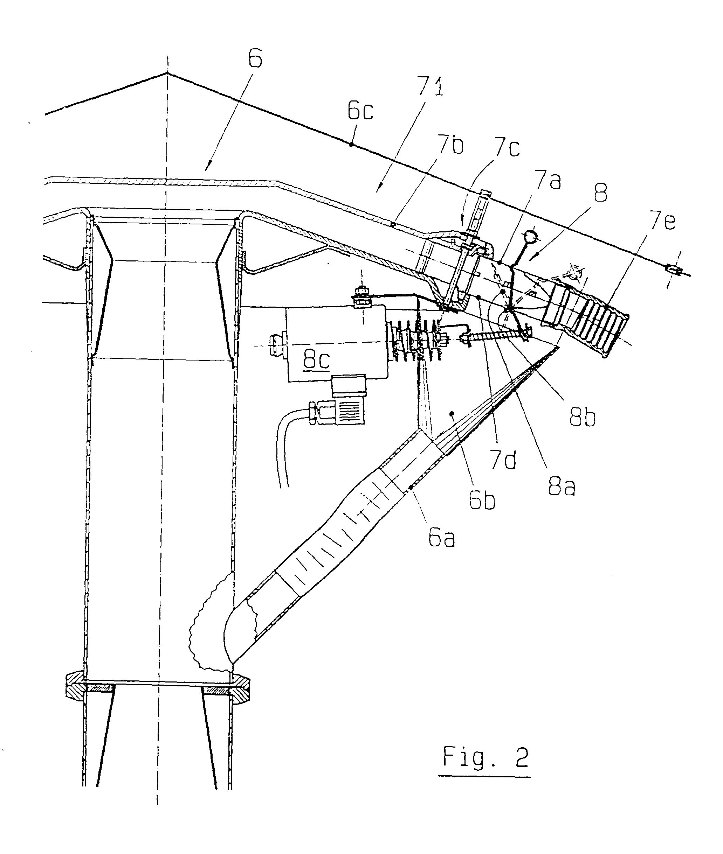

In der etwas vergrößerten Darstellung der Fig.2 ist die in der Fig.1 linke Verteilerleitung 72 weggelassen. Es ist aber nun stattdessen ein Deckel 6c angedeutet, wie er für Verteilerköpfe üblich ist.

Ein Stutzen 7a schließt jeweils an einem Abgang 7b der Verteilerleitungen mittels einer Klemmverbindung 7c der Verteilerleitungen 7 an. In dem Stutzen 7a ist eine Absperreinrichtung 8 vorgesehen. Diese besteht aus einer um eine an dem Stutzen ortsfeste Achse 8b so schwenkbaren Klappe 8a, daß diese wechselweise einen Abzweig 7d zu der Rückleitung 6a und den Förderquerschnitt der Verteilerleitung 71 verschließt. Die Stellung der Klappe 8a wird von der Erregung oder Entregung eines Elektromagneten 8c bestimmt, der-an der Klemmverbindung 7c ortsfest arretierbar ist. Die Verteilerleitungen 7 umfassen schließlich an den Stutzen 7a befestigte Förderschläuche 7e, die das Verteilgut 2 zu den in der Zeichnung nicht sichtbaren Streuern transportieren.

Der Abzweig 7d mündet in einem an dem Verteilerkopf 6 ortsfesten Trichter 6b, an den wiederum die Rückleitung 6a anschließt.

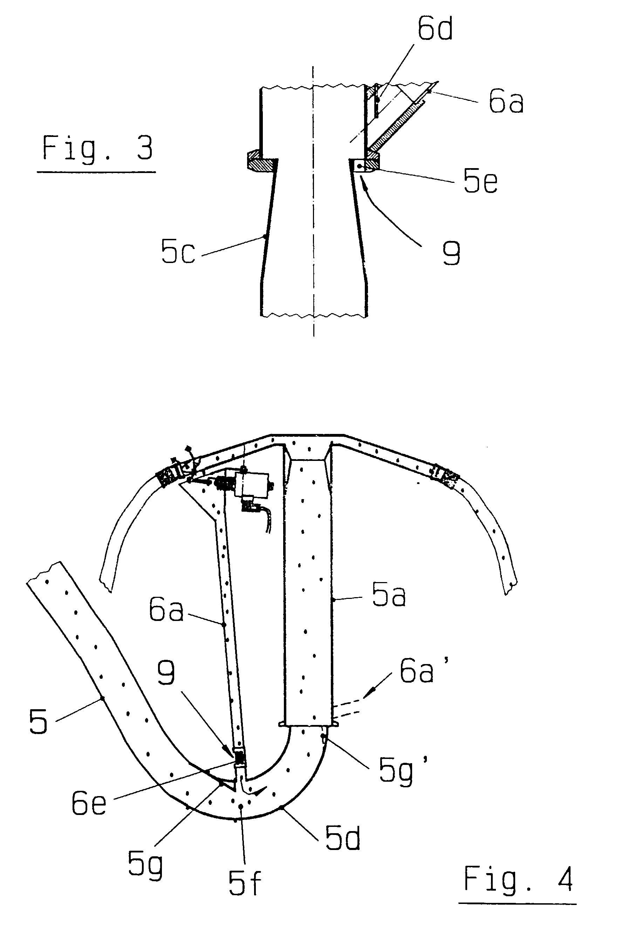

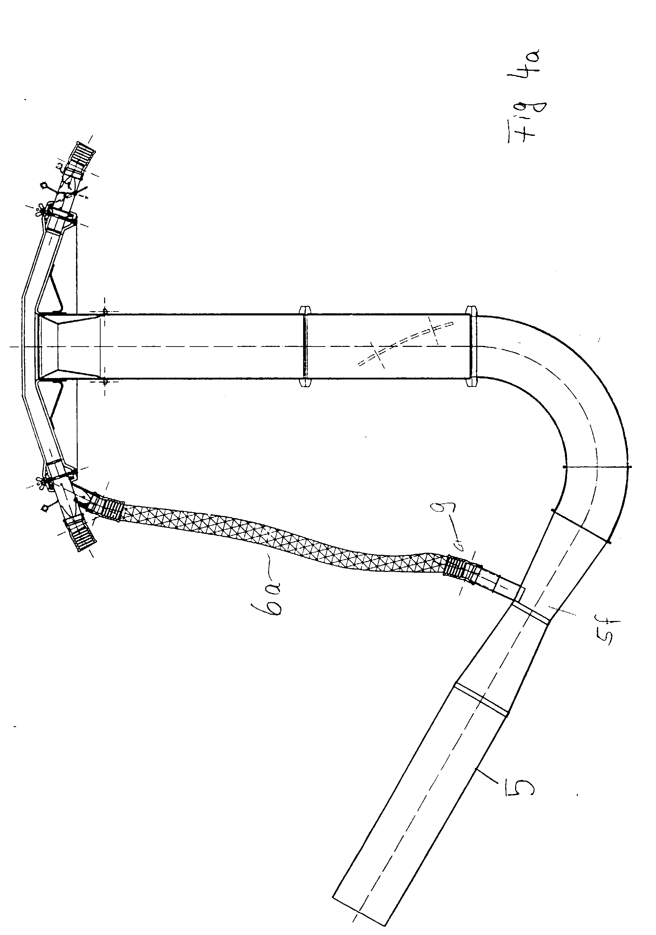

In der Variante der Fig.3 ist - in Strömungsrichtung kurz hinter der Einziehung 5c - eine Zuluftdüse 5e vorgesehen, welche den Förderstrom in der Zuleitung 5 mit der Umgebung verbindet. Der Unterdruck hinter der Einziehung 5c reicht aus, um außer auf die Rückleitung 6 auch noch auf die Umgebung einen Saugdruck auszuüben, so daß durch die Zuluft 9 genügend Förderluft zur Verfügung steht, um stromab eine Verstopfung eines Förderquerschnittes zu vermeiden. In der Fig.3 ist außerdem ein Schieber 6d angedeutet, mit dem die Rückleitung 6a ganz oder teilweise abgesperrt werden kann.

Diese Rückleitung 6a kann auch, wie die Fig.4, 4a zeigen, in einen stromauf an das senkrechte Teil 5a anschließenden, hier als Krümmer ausgebildeten Teil 5d der Zuleitung 5 einmünden, etwa in dessen waagerechtes Teilstück 5f; den Strömungsverhältnissen kommt es dabei entgegen, wenn der Einmündung anstelle einer Einziehung ein flaches Düsenblech 5g vorhergeht, das den Strömungsquerschnitt ebenfalls düsenartig einzieht, jedoch unsymmetrisch zu dem großen Krümmungsradius des Teilstückes 5f hin verschiebend, wo die Strömungsgeschwindigkeit am höchsten ist. Eine Zuluftdüse 6e ist bei dieser Ausführung innerhalb der Rückleitung 6a vorgesehen.

Die spezielle Ausbildung der düsenartigen Einziehung der Zuleitung 5 vor der Einmündung der Rückleitung 6a, wie sie in der Fig.4 gezeigt ist, ergibt wirkungsgemäß das gleiche wie mit einer Anordnung entsprechend Fig.1 bis 3, wobei die Rückleitung 6a' und das Düsenblech 5g' lediglich angedeutet sind.

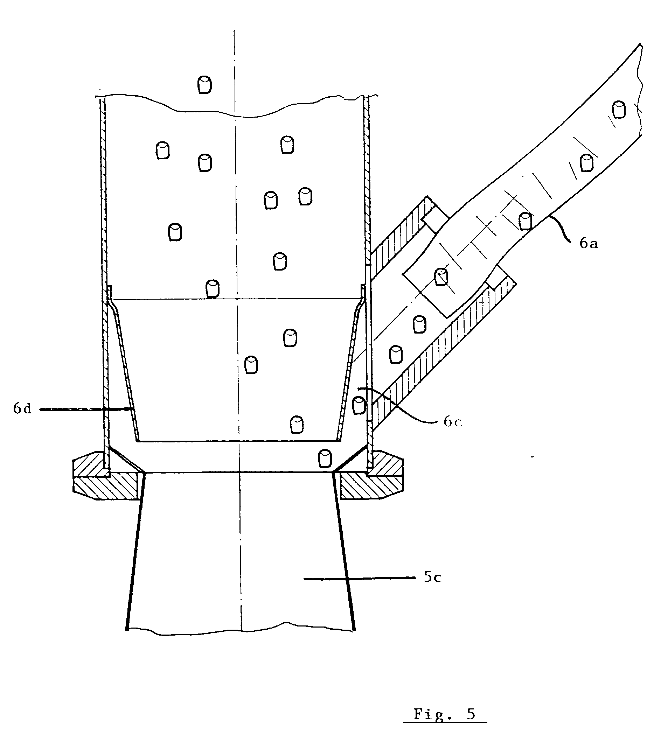

Bei dem Ausführungsbeispiel nach Fig. 5 sind gleiche Teile mit gleichen Bezugszeichen versehen. Bei diesem Ausführungsbeispiel ist das starre senkrechte Teil 5a, durch das das Verteilgut 2 senkrecht nach oben transportiert wird, wie in den Ausführungsbeispielen nach den Fig. 1 bis 4, mit einer düsenartigen Einziehung 5c ausgebildet. Oberhalb der Einziehung 5c endet die Rückleitung 6a. Im Unterschied zu der Ausführungsform nach den Fig. 1 bis 4 ist hier im Bereich der Einmündung 6c der Rückleitung 6a ein konisch ausgebildetes Rohrstück 6d in den senkrechten Teil 5a eingesetzt worden. Dieses konische Rohrstück hat einen zur Einziehung 5c hin gerichteten geringeren Durchmesser, wobei dieser so gewählt ist, daß das Verteilgut 2 in etwa ringförmig in die Zuleitung 5 eingeführt wird. Hierdurch erreicht man eine günstigere Verteilung des rückgeführten Verteilgutes 2.

## Patentansprüche

1. Landwirtschaftliche pneumatische Verteilmaschine zum Verteilen eines vorzugsweise körnigen Verteilgutes, insbesondere eines Saatgutes oder eines Düngers aus einem Vorratsbehälter mit einer Dosiereinrichtung für die dosierte Förderung des Verteilgutes aus dem Vorratsbehälter über eine Zuleitung zu einem Verteilerkopf, und mit mehreren an dem Verteilerkopf angeschlossenen Verteilerleitungen zur Zuführung von jeweils einer Teilmenge des Verteilgutes zu jeweils einem Streuer für das Verteilgut, insbesondere einem Säschar oder einem Düngerstreuer, wobei zumindest ein Teil der Verteilerleitungen an ihren Abgängen aus dem Verteilerkopf mit Absperreinrichtungen versehen ist, die so schaltbar sind, daß die Förderung des Verteilgutes zu dem jeweils zugehörigen Streuer abgesperrt ist und stattdessen über eine jeweils zugehörige Rückleitung erfolgt, dadurch gekennzeichnet, daß
die Rückleitung (6a,6a') bypass-artig in der Zuleitung (5) zu dem Verteilerkopf (6) mündet und daß bei gesperrten Verteilerleitungen (71) die Dosiereinrichtung (3) so eingeregelt oder -gesteuert wird, daß die ausgebrachte, auf die Bestellfläche bezogene Menge des Verteilgutes (2) sich gegenüber derjenigen bei entsprechend aktivierten Verteilerleitungen nicht verändert.

2. Verteilmaschine nach Anspruch 1, dadurch gekennzeichnet, daß die Sperrung bestimmter Verteilerleitungen für eine Fahrgassenschaltung vorgesehen ist, die selbsttätig oder manuell aktivierbar ist und die dabei mittels der Absperreinrichtungen (8) diejenigen Verteilerleitungen (71) absperrt, deren Streuer in dem Weg der Schlepperräder eines die Verteilmaschine bewegenden Schleppers enden.

3. Verteilmaschine nach Anspruch 1 oder 2, dadurch gekennzeichnet, daß die Rückleitung (6a,6a') in einem vorzugsweise senkrechten, unmittelbar vor dem Verteilerkopf (6) befindlichen Teil (5a) der Zuleitung (5) mündet.

4. Verteilmaschine nach Anspruch 1 oder 2, dadurch gekennzeichnet, daß die Rückleitung (6a,6a') in einem vorzugsweise gekrümmten, vor dem Verteilerkopf (6) befindlichen Teil (5d) der Zuleitung (5), beispielsweise in einem waagerechten Bereich (5f) dieses Teiles (5d) und insbesondere an der Stelle mit der größten Krümmung, mündet.

5. Verteilmaschine nach einem der Ansprüche 1 bis 4, dadurch gekennzeichnet, daß die Zuleitung (5) in Förderrichtung vor, vorzugsweise unmittelbar vor dem Anschluß der Rückleitung (6a,6a') in die Zuleitung (5) eine düsenartige erste Einziehung (5c) ihres Querschnitts aufweist, die so bemessen ist, daß das Verteilgut (2) aus der Rückleitung (6a,6a') in die Zuleitung (5) angesaugt wird.

6. Verteilmaschine nach einem der Ansprüche 1 bis 5, dadurch gekennzeichnet, daß die Zuleitung (5) vor, vorzugsweise unmittelbar vor ihrer Einmündung in den Verteilerkopf (6) eine düsenartige zweite Einziehung ( 5b) aufweist.

7. Verteilmaschine nach einem der Ansprüche 1 bis 6, dadurch gekennzeichnet, daß die Absperreinrichtungen (8) in Stutzen (7a) vorgesehen sind, die von dem Verteilerkopf (6) trennbar und mit denen die Verteilerleitungen (7) verbindbar sind.

8. Verteilmaschine nach einem der Ansprüche 1 bis 7, dadurch gekennzeichnet, daß in den Stutzen (7a) der absperrbaren Verteilerleitungen (71) jeweils die von der zugehörigen Absperreinrichtung (8) beeinflußte Abzweigung (7d) für die Rückleitung (6a,6a') vorgesehen ist.

9. Verteilmaschine nach einem der Ansprüche 1 bis 8, dadurch gekennzeichnet, daß die Absperreinrichtungen (8) als elektromagnetisch betätigbare Klappen ausgebildet sind.

10. Verteilmaschine nach einem der Ansprüche 8 oder 9, dadurch gekennzeichnet, daß die Abzweigungen (7d) jeweils in einem an dem Stutzen (7a) - gegebenenfalls abgedichtet - anschließenden Trichter (6b) münden, an dem die zugehörige Rückleitung (6a,6a') angeschlossen ist.

11. Verteilmaschine nach Anspruch 9, dadurch gekennzeichnet, daß mindestens zwei Abzweigungen (7d) in einem Trichter (6b) enden.

12. Verteilmaschine nach einem der Ansprüche 5 bis 11, dadurch gekennzeichnet, daß die Einziehung (5c) rotationssymmetrisch zu der Achse der Zuleitung (5) ausgebildet ist.

13. Verteilmaschine nach Anspruch 12, dadurch gekennzeichnet, daß die Einziehung (5c) eine kegelige Mantelfläche aufweist.

14. Verteilmaschine nach einem der Ansprüche 5 bis 11, dadurch gekennzeichnet, daß die Einziehung (5c) von einem in der Zuleitung (5) vorgesehenen, vorzugsweise ebenen, den Strömungsquerschnitt in der Zuleitung (5) in Strömungsrichtung sukzessive bis zur Einmündung der Rückleitung (6a,6a') vermindernden Düsenblech (5g,5g') gebildet wird.

15. Verteilmaschine nach Anspruch 14, dadurch gekennzeichnet, daß das Düsenblech (5g,5g') so angeordnet ist, daß ein kreisförmiger Strömungsquerschnitt in Strömungsrichtung sukzessive bis zur Einmündung der Rückleitung (6a,6a') durch einen in Strömungsrichtung sukzessive sich vergrößernden Kreisabschnitt vermindert wird.

16. Verteilmaschine nach einem der Ansprüche 1 bis 15, dadurch gekennzeichnet, daß in Strömungsrichtung unmittelbar hinter der Einziehung (5c), beispielsweise in der Zuleitung (5) oder der Rückleitung (6a,6a'), eine Zuluftdüse (5e,6e) für eine der Umgebung entnommene Zuluft (9) vorgesehen ist.

17. Verteilmaschine nach einem der Ansprüche 1 bis 16, dadurch gekennzeichnet, daß die Rückleitung (6a,6a') absperrbar ausgebildet ist.

18. Verteilmaschine nach Anspruch 17, dadurch gekennzeichnet, daß in der Rückleitung (6a,6a'), vorzugsweise zugsweise kurz vor ihrer Einmündung in die Zuleitung (5), ein Schieber (6d) vorgesehen ist.

19. Verteilmaschine nach einem der Ansprüche 1 bis 18, dadurch gekennzeichnet, daß strömungsmäßig gesehen oberhalb der Einziehung (5c) ein konischer Rohrabschnitt eingesetzt ist, der sich entgegen der Strömungsrichtung hin verjüngt und der die Rückleitung (6a) ganz oder teilweise übergreift.

## Claims

1. An agricultural pneumatic distributing machine for distributing a preferably granular material to be distributed in particular seeds or fertiliser, from a storage hopper, with a metering arrangement for the metered conveying - from the storage hopper to a distribution head via a feed line - of the material to he distributed, and with a plurality of distribution lines which are joined to the distribution head and which are for feeding of a partial quantity of the material to he distributed to a respective scatterer for the material to be distributed, in particular a sowing share or a fertiliser spreader, at least some of the distribution lines being provided, at their exits from the distribution head, with shut off devices which can be actuated in such a manner that the conveying of the material to be distributed is shut off with respect to the respective scatterer and instead ensues via a respective return line, characterised in that the return line (6a, 6a') opens bypass-like into the feed line (5) to the distribution head (6), and in that when the distribution lines (71) are blocked, the metering arrangement (3) is regulated or controlled in such a manner that the quantity of the material (2) to be distributed which is provided related to the cultivation area does not alter in relation to that provided when the distribution lines arc appropriately activated.

2. A distributing machine in accordance with Claim 1, characterised in that the blocking of certain distribution lines is provided for track control which can be activated automatically or manually and which as a result shuts off, by means of the shut off devices (8). those distribution lines (71) whose scatterers end in the path of the tractor wheels of a tractor moving the distributing machine.

3. A distributing machine in accordance with Claim 1 or 2, characterised in that the return line (6a, 6a') opens into a preferably perpendicular part (5a) of the feed line (5), which part (5a) is located immediately upstream of the distribution head (6).

4. A distributing machine in accordance with Claim 1 or 2, characterised in that the return line (6a, 6a') opens into a preferably curved part (5d), located upstream of the distribution head (6), of the feed line (5), for example opens into a horizontal region (5f) of this part (5d) and in particular at the site with the greatest curvature.

5. A distributing machine in accordance with any one of Claims 1 to 4, characterised in that upstream - in the conveying direction - of the joining of the return line (6a, 6a') with the feed line (5), preferably immediately upstream thereof, the feed line (5) has a nozzle-like first narrowing (5c) of its cross-section, this narrowing being dimensioned in such a manner that the material to be distributed is drawn into the feed line (5) from the return line (6a. 6a').

6. A distributing machine in accordance with any one of Claims 1 to 5, characterised in that the feed line (5) has a nozzle-like second narrowing (5b) located upstream, preferably immediately upstream, of its discharge into the distribution head (6).

7. A distributing machine in accordance with any one of Claims 1 to 6, characterised in that the shut off devices (8) are provided in connection pieces (7a) which are disconnectable from the distribution head (6) and with which the distribution lines (7) are connectable.

8. A distributing machine in accordance with any one of Claims 1 to 7, characterised in that a branch (7d), influenced by the respective shut off device (8), for the return line (6a, 6a') is provided in the connection pieces (7a) of the distribution lines (71) which are able to he shut off.

9. A distributing machine in accordance with any one of Claims 1 to 8, characterised in that the shut off devices (8) are in the form of electromagnetically-actuatable valves.

10. A distributing machine in accordance with one of Claims 8 and 9, characterised in that the branches (7d) open into a respective funnel (6b) which is joined - optionally in a sealed manner - to the connection piece (7a). the associated return line (6a, 6a') being joined to this funnel (6b).

11. A distributing machine in accordance with Claim 9, characterised in that at least two branches (7d) end in a funnel (6b).

12. A distributing machine in accordance with any one of Claims 5 to 11, characterised in that the narrowing (5c) is rotationally-symmetrical with respect to the axis of the feed line (5).

13. A distributing machine in accordance with Claim 12, characterised in that the narrowing (5c) has a tapered outer surface.

14. A distributing machine in accordance with any one of Claims 5 to 11, characterised in that the narrowing (5c) is formed by a preferably plane nozzle sheet (5g, 5g') which is provided in the feed line (5) and which, up to the discharge of the return line (6a, 6a'), gradually, reduces the cross-section of flow in the feed line (5) in the direction of flow.

15. A distributing machine in accordance with Claim 14, characterised in that the nozzle sheet (5g, 5g') is arranged in such a manner that a circular segment gradually enlarging in the direction of flow gradually reduces, up to the discharge of the return line (6a, 6a'), a circular cross-section of flow in the direction of flow.

16. A distributing machine in accordance with any one of Claims 1 to 15, characterised in that immediately downstream of the narrowing (5c) in the direction of flow, for example in the feed line (5) or the return line (6a, 6a'), an air inlet nozzle (5e, 6e) is provided for incoming air (9) removed front the surroundings.

17. A distributing machine in accordance with any one of Claims 1 to 16, characterised in that the return line (6a, 6a') can be shut off.

18. A distributing machine in accordance with Claim 17, characterised in that a slide valve (6d) is provided in the return line (6a, 6a'), preferably just upstream of its discharge into the feed line (5).

19. A distributing machine in accordance with any one of Claims 1 to 18, characterised in that a conical pipe length is inserted above the narrowing (5c) viewed from the point of view of flow, this pipe length tapering in the opposite direction to the direction of flow and totally or partially overlapping the return line (6a).

## Revendications

1. Machine agricole répartitrice pneumatique, destinée, à partir d'un réservoir de stockage comportant un dispositif de dosage pour doser le débit, à distribuer un produit à répartir, de préférence en grains, en particulier une semence ou un engrais, par une conduite d'alimentation, depuis le réservoir de stockage jusqu'à une tête répartitrice, et comportant plusieurs conduites de répartition raccordées à la tête répartitrice pour amener chaque fois une partie du produit à répartir à chaque fois un épandeur, en particulier à un soc de semoir ou à un épandeur d'engrais, au moins une partie des conduites de répartition étant équipées, à leur sortie de la tête répartitrice, de dispositifs de coupure pouvant être inversés de façon à couper le débit de produit à répartir vers chaque épandeur associé, et de façon qu'en remplacement, ce débit se fasse chaque fois par une conduite de retour associée,
caractérisée en ce que la conduite de retour (6a, 6a') débouche vers la tête répartitrice (6), en formant un by-pass dans la conduite d'alimentation (5), et en ce que, lorsque les conduites de répartition (71) sont coupées, le dispositif de dosage (3) est réglé ou commandé de telle façon que la quantité du produit à répartir (2) extraite, rapportée à la surface cultivée, ne se modifie pas par rapport à celle correspondant à des conduites de répartition associées activées.

2. Machine répartitrice suivant la revendication 1, caractérisée en ce que la coupure de conduites de répartition déterminées est prévue pour un dispositif d'inversion pour travailler en présence de traces de circulation, dispositif qui peut être actionné automatiquement ou manuellement et qui alors coupe, au moyen des dispositifs de coupure (8), les conduites de répartition (71) dont les épandeurs débouchent dans la trace des roues d'un tracteur mettant en mouvement la machine répartitrice.

3. Machine répartitrice suivant la revendication 1 ou la revendication 2, caractérisée en ce que la conduite de retour (6a, 6a') débouche dans une partie (5a) de la conduite d'alimentation (5), de préférence verticale, située directement avant la tête répartitrice (6).

4. Machine répartitrice suivant la revendication 1 ou la revendication 2, caractérisée en ce que la conduite de retour (6a, 6a') débouche, dans une partie (5d) de la conduite d'alimentation (5), de préférence courbe, située avant la tête répartitrice (6), par exemple dans une zone horizontale (5f) de cette partie (5d), et, en particulier à l'endroit comportant la courbure la plus grande.

5. Machine répartitrice suivant l'une des revendications 1 à 4, caractérisée en ce que la conduite d'alimentation (5) présente, dans le sens de l'alimentation, avant le raccordement de la conduite de retour (6a, 6a') dans la conduite d'alimentation (5), de préférence directement avant ce raccordement, une première réduction (5c), en forme de buse, de sa section, qui est dimensionnée de telle façon que le produit à répartir (2) soit aspiré de la conduite de retour (6a, 6a') dans la conduite d'alimentation (5).

6. Machine répartitrice suivant l'une des revendications 1 à 5, caractérisée en ce que la conduite d'alimentation (5) présente, avant de déboucher dans la tête répartitrice (6), de préférence directement avant de déboucher dans la tête répartitrice (6), une deuxième réduction (5b) en forme de buse.

7. Machine répartitrice suivant l'une des revendications 1 à 6, caractérisée en ce que les dispositifs de coupure (8) sont prévus dans des tubes de raccordement (7a) que l'on peut séparer de la tête répartitrice (6) et avec lesquels peuvent être reliées les conduites de répartition (7).

8. Machine répartitrice suivant l'une des revendications 1 à 7, caractérisée en ce que, dans chacun des tubes de raccordement (7a) des conduites de répartition (71) pouvant être coupées, il est prévu la dérivation (7d) pour la conduite de retour (6a, 6a'), actionnée par le dispositif de coupure (8) associé.

9. Machine répartitrice suivant l'une des revendications 1 à 8, caractérisée en ce que les dispositifs de coupure (8) sont réalisés sous la forme de volets pouvant être actionnés électromagnétiquement.

10. Machine répartitrice suivant la revendication 8 ou la revendication 9, caractérisée en ce que les dérivations (7d) débouchent chacune dans une trémie (6b) se raccordant - le cas échéant de façon étanche - au tube de raccordement (7a), et à laquelle est raccordée la conduite de retour (6a, 6a') associée.

11. Machine répartitrice suivant la revendication 9, caractérisée en ce qu'au moins deux dérivations (7d) se terminent dans une trémie (6b).

12. Machine répartitrice suivant l'une des revendications 5 à 11, caractérisée en ce que la réduction (5c) est réalisée symétrique en rotation par rapport à l'axe de la conduite d'alimentation (5).

13. Machine répartitrice suivant la revendication 12, caractérisée en ce que la réduction (5c) présente une surface de revêtement conique.

14. Machine répartitrice suivant l'une des revendications 5 à 11, caractérisée en ce que la réduction (5c) est réalisée par une tôle de buse (5g, 5g') de préférence plane, prévue dans la conduite d'alimentation (5), réduisant la section d'écoulement dans la conduite d'alimentation (5) successivement, dans le sens d'écoulement, jusqu'à l'embouchure de la conduite de retour (6a, 6a').

15. Machine répartitrice suivant la revendication 14, caractérisée en ce que la tôle de buse (5g, 5g') est disposée de façon à réduire, successivement, dans le sens de l'écoulement, une section d'écoulement de forme circulaire jusqu'à l'embouchure de la conduite de retour (6a, 6a'), par une section circulaire s'agrandissant progressivement dans le sens de l'écoulement.

16. Machine répartitrice suivant l'une des revendications 1 à 15, caractérisée en ce qu'il est prévu, dans le sens de l'écoulement, directement derrière la réduction (5c), par exemple dans la conduite d'alimentation (5) ou dans la conduite de retour (6a, 6a'), une buse d'apport d'air (5e, 6e) pour un appoint d'air (9) pris sur l'environnement.

17. Machine répartitrice suivant l'une des revendications 1 à 16, caractérisée en ce que la conduite de retour (6a, 6a') est réalisée de façon à pouvoir être coupée.

18. Machine répartitrice suivant la revendication 17, caractérisée en ce qu'une soupape (6d) est prévue dans la conduite de retour (6a, 6a'), de préférence un peu avant de déboucher dans la conduite d'alimentation (5).

19. Machine répartitrice suivant l'une des revendications 1 à 18, caractérisée en ce que, du point de vue écoulement, au-dessus de la réduction (5c), est installée une partie tubulaire conique, qui se réduit dans le sens opposé à l'écoulement et qui empiète, complètement ou en partie, sur la conduite de retour (6a).
